Europäisches Patentamt

European Patent Office

Office européen des brevets

(19)

(11) Veröffentlichungsnummer : **0 139 953**
**B1**

(12) # EUROPÄISCHE PATENTSCHRIFT

(45) Veröffentlichungstag der Patentschrift :
06.07.88

(51) Int. Cl.⁴ : **A 62 D   3/00**, B 09 B   1/00,
C 04 B  18/06

(21) Anmeldenummer : 84109723.1

(22) Anmeldetag : 16.08.84

(54) Verfahren zur umweltfreundlichen Deponierung von Kohlekraftwerk-Reststoffen.

(30) Priorität : 19.08.83 DE 3329972
29.12.83 DE 3347376

(43) Veröffentlichungstag der Anmeldung :
08.05.85 Patentblatt 85/19

(45) Bekanntmachung des Hinweises auf die Patenterteilung : 06.07.88 Patentblatt 88/27

(84) Benannte Vertragsstaaten :
AT BE DE GB IT NL SE

(56) Entgegenhaltungen :
EP-A- 0 022 318
BE-A-   885 712
DE-A- 2 357 407
DE-A- 3 109 632

(73) Patentinhaber : Gebr. Knauf Westdeutsche Gipswerke
KG
Postfach 10
D-8715 Iphofen (DE)

(72) Erfinder : Wirsching, Franz, Dr.
In den Weinbergen 7
D-8715 Iphofen (DE)
Erfinder : Poch, Wingolf, Dr.
Wiesenweg 5
D-8710 Kitzingen (DE)
Erfinder : Hüller, Rolf, Dr.
Holzgasse 7
D-8715 Iphofen (DE)
Erfinder : Hamm, Heiner, Dr.
Schlesierstrasse 19
D-8700 Würzburg (DE)

(74) Vertreter : Werner, Hans-Karsten, Dr. et al
Deichmannhaus am Hauptbahnhof
D-5000 Köln 1 (DE)

EP 0 139 953 B1

Jouve, 18, rue St-Denis, 75001 Paris, France

## Beschreibung

Gegenstand der vorliegenden Erfindung ist ein Verfahren zur umweltfreundlichen Deponierung von Kohlekraftwerk-Reststoffen durch Vermischung von trockenen Reststoffen mit Reststoffen einer Entschwefelungsanlage.

In allen Kohlekraftwerken fallen trockene Reststoffe in Form von Rostaschen und Flugaschen an, die zwar teilweise für andere Zwecke verwendet werden können, jedoch noch immer zum größten Teil in Deponien verbracht werden müssen. Wegen der Staubbelästigung und der Verunreinigung des Grundwassers bei der Auslaugung deponierter Flugaschen durch Grundwasser sind bei der Deponierung besondere Maßnahmen erforderlich. Um die Flugasche von Braunkohle-Verbrennungsanlagen besser deponieren zu können, wird seit einiger Zeit die Flugasche stellenweise vor der Verkippung mit Wasser versetzt und intensiv vermischt. Hierdurch wird eine Verdichtung bewirkt und eine Verringerung der Wasserdurchlässigkeit im Durchschnitt um den Faktor 1 000 ; vgl. Braunkohle, Heft 2, Februar 1981, S. 7-11. Verwertungen von Flugaschen von Steinkohlekraftwerken sind beispielsweise beschrieben worden in der DE-OSen 24 00 350, 31 09 879, 31 13 714, 31 24 003, 31 17 436, 31 19 422, 23 57 407, 31 09 632 und EP-OS 22 318.

In der DE-OS 21 30 309 sowie den US-PSen 3,634,115, 3,720,609 und RE 29 783 ist ein Verfahren beschrieben, bei welchem Flugasche zusammen mit wäßrigen Aufschlämmungen chemischer Abfälle, Kalk und wasserlöslichen Sulfatverbindungen miteinander umgesetzt und zu deponierfähigen Produkten verarbeitet werden. Hierbei sollen insbesondere Beizlösungen mit einem hohen Gehalt löslicher Sulfate durch Umsetzung mit Calciumhydroxid oder Calciumcarbonaten neutralisiert und unter Zusatz von Flugasche deponiefähig gemacht werden.

Zur Rauchgasentschwefelung von Kohlekraftwerken werden in zunehmendem Maße Naßentschwefelungs-Verfahren eingesetzt. Ein Übersichtsartikel über die Entschwefelung von Rauchgas ist in Chem. Ing. Tech. 55 (1983) Nr. 9, S. 667 bis 683 erschienen, in welchem sowohl die nassen als auch die trockenen Entschwefelungsverfahren beschrieben sind.

Die vorliegende Erfindung hat sich die Aufgabe gestellt, ein Verfahren zur umweltfreundlichen Deponierung von Kohlekraftwerk-Reststoffen zu entwickeln durch Vermischen von trockenen Reststoffen mit Reststoffen einer Entschwefelungsanlage. Insbesondere hat sich die Erfindung die Aufgabe gestellt, die Aschen und Flugaschen herkömmlicher Kohleverbrennungsanlagen mit den Reststoffen nasser oder trockener Entschwefelungsverfahren zu vermischen und deponiefähig zu machen.

Aus den intensiven Untersuchungen der Anmelderin hat sich ergeben, daß diese Aufgabe gelöst werden kann, dadurch daß trockene Reststoffe mit den Reststoffen eines nassen oder trockenen Entschwefelungsverfahrens unter Zusatz von mindestens 3 Gew.-% Calciumhydroxid bezogen auf die Menge der trockenen Reststoffe zu einem erdfeuchten Produkt vermischt, in die Deponie verbracht und dort verdichtet werden.

Die so erhaltenen deponierten Reststoffe geben keine Staubbelästigung und führen zu keiner Verunreinigung des Grundwassers durch Auslaugung, auch wenn sie gewisse Mengen an wasserlöslichen Salzen wie Sulfaten, Sulfiten, Chloriden und Nitraten enthalten. Die so erhaltenen Produkte sind von hoher spezifischer Dichte, geringer Wasserdurchlässigkeit und mechanisch sehr stabil. Sie erfüllen somit alle Anforderungen an ein einfach und sicher deponierbares Produkt. Diese Bedingung ist insbesondere erfüllt, wenn das Verhältnis Gips : trockene Feststoffe in dem Bereich 1 : 0,5 bis 1 : 20 liegt. Bei höherem Gipsgehalt steigt die Gefahr der Auslaugung durch das Grundwasser. Bei einem Verhältnis von mehr als 1 : 20 ist es wirtschaftlich nicht mehr sinnvoll die Reststoffe homogen zu vermischen.

Eine besonders bevorzugte Ausführungsform des erfindungsgemäßen Verfahrens besteht darin, das Calciumhydroxid einzuführen in Form eines trockenen, pulverförmigen Flugaschederivats mit einem Gehalt von Calciumhydroxid von mindestens 4 %. Ein derartiges trockenes pulverförmiges Flugaschederivat ist beispielsweise erhältlich nach dem Verfahren der EP-A-0 135 147 (veröffentlicht am 27.03.85). Hierbei wird Flugasche aus einem trockenen Entschwefelungsverfahren unter Zusatz von Kalksplitt, bei welchem Flugasche mit hohem Gehalt an freiem Calciumoxid entsteht mit einer überschüssigen Menge an Wasser oder einer wäßrigen Suspension so abgelöscht, daß die Reaktionswärme der Ablöschung zur vollständigen Verdampfung des überflüssigen Wassers führt. Da dieses Verfahren einen Calciumoxidgehalt von mindestens 3 % erfordert, ist ein derartiges trockenes, pulverförmiges Flugaschederivat erhältlich, welches mindestens 4 % Calciumhydroxid enthält. Trockene Reststoffe ohne Gehalt an Calciumoxid oder Calciumhydroxid können daher mit dem trockenen, pulverförmigen Flugaschederivat von mindestens 4 % Calciumhydroxid so vermischt werden, daß das Gesamtgemisch mindestens 3 % Calciumhydroxid aufweist.

Die Menge an Calciumhydroxid oder calciumhydroxidhaltigen trockenen, pulverförmigen Flugaschederivat werden daher auch in Abhängigkeit der Zusammensetzung der übrigen Reststoffe ausgewählt. Um zu einem erdfeuchten Material zu kommen, reichen im allgemeinen Wassermengen von ca. 25 Gew.-% aus. Ein derartiges Material ist gut, einfach und staubfrei transportierbar und kann daher ohne besondere Vorsichtsmaßnahmen in die Deponie verbracht und dort in entsprechenden Lagen aufgetragen und verdichtet werden. Als Wasser können auch wässrige Suspensionen und Kraftwerkabwässer verwendet werden.

**0 139 953**

Das erfindungsgemäße Verfahren ist in den nachfolgenden Beispielen näher erläutert.

Beispiel 1

In einem Durchlaufmischer wird reine Flugasche mit einem freien Calciumoxidgehalt von 1 %, die aus einem Steinkohlekessel stammt mit einer 50 % Feststoff enthaltenden Gipssuspension aus einem Naßentschwefelungswerfahren im Verhältnis 1 : 0,25 einstufig so vermischt, daß sich eine Flugasche/Gipsverhältnis von 2 : 1 einstellt. Zum Aktivieren der Flugasche werden 5 % Calciumhydroxid bezogen auf die trockene Flugasche in der Vermischungsstufe zugegeben. Das erdfeuchte Reaktionsprodukt wird in der Deponie mit üblichen Verdichtungsgeräten maximal verdichtet. Proben des so erhaltenen Materials haben folgende Werte :

| | |
|---|---|
| Raumgewicht | 1,6 kp/dm$^3$, |
| 7-Tage-Druckfestigkeit | 4,0 MN/m$^2$, |
| 28-Tage-Druckfestigkeit | 7,0 MN/m$^2$, |
| 28-Tage-Durchlässigkeitsbeiwert | $7 \times 10^{-9}$ m/s. |

Vergleichversuch

Das Beispiel 1 wird wiederholt, jedoch ohne Zusatz des Calciumhydroxids. Proben des so erhaltenen Materials weisen zwar ein vergleichbares Raumgewicht jedoch wesentlich schlechtere Werte für Druckfestigkeit und den Durchlässigkeitsbeiwert auf. Die 7-Tage- und 28-Tage-Druckfestigkeit betrug weniger als 1 MN/m$^2$. Der 28-Tage-Durchlässigkeitsbeiwert war größer als $1 \times 10^{-3}$ m/s.

Beispiel 2

1 Gewichtsteil trockenes, pulverförmiges Flugaschederivat, welches aus Flugasche gewonnen wurde mit einem Gehalt an freiem Calciumoxid von ca. 20 % und die aus einem im Trocken-Additiv-Verfahren befeuerten Braunkohlekessel stammt (hergestellt gemäß Beispiel 1 der EP-A-0 135 147, veröffentlicht am 27.03.85) wird mit 1 Gewichtsteil Flugasche mit einem freien Calciumoxidgehalt von 1 %, die aus einem Steinkohlekessel stammt, miteinander vermischt und in einem Durchlaufmischer mit einer 50 % Feststoff enthaltenen Gipssuspension im Verhältnis 1 : 0,25 so vermischt, daß sich ein Flugasche/Gipsverhältnis von 2 : 1 einstellt. Das so erhaltene Produkt wird in die Deponie verbracht und mit üblichen Verdichtungsgeräten maximal verdichtet. Proben des so erhaltenen Materials hatten folgende Werte :

| | |
|---|---|
| Raumgewicht | 1,7 kp/dm$^3$, |
| 7-Tage-Druckfestigkeit | 3,5 MN/m$^2$, |
| 28-Tage-Druckfestigkeit | 9,5 MN/m$^2$, |
| 28-Tage-Durchlässigkeitsbeiwert : | $6 \times 10^{-9}$ m/s. |

**Patentansprüche**

1. Verfahren zur umweltfreundlichen Deponierung von Kohlekraftwerk-Reststoffen durch Vermischung von trockenen Reststoffen mit Reststoffen einer Entschwefelungsanlage, dadurch gekennzeichnet, daß das Gemisch unter Zusatz von mindestens 3 Gew.-% Calciumhydroxid bezogen auf die Menge der trockenen Reststoffe zu einem erdfeuchten Produkt vermischt, in die Deponie verbracht und dort verdichtet wird.

2. Verfahren gemäß Anspruch 1, dadurch gekennzeichnet, daß der Zusatz von Calciumhydroxid in Form eines trockenen, pulverförmigen Flugaschederivats mit einem Gehalt an Calciumhydroxyd von mindestens 4 Gew.-% erfolgt.

3. Verfahren gemäß Anspruch 1 oder 2, dadurch gekennzeichnet, daß als Reststoffe einer Entschwefelungsanlage die wäßrige Suspension des Hydrozyklonunterlaufs einer zweistufigen nassen Rauchgasentschwefelungsanlage verwendet wird.

4. Verfahren gemäß Anspruch 1 oder 2, dadurch gekennzeichnet, daß als Reststoffe einer Entschwefelungsanlage das trockene Entschwefelungsprodukt einer trockenen Rauchgasreinigung verwendet wird.

5. Verfahren gemäß einem der Ansprüche 1 bis 4, dadurch gekennzeichnet, daß in dem deponierten Produkt das Verhältnis Gips : trockene Reststoffe 1 : 0,5 bis 1 : 20 beträgt.

**Claims**

1. A process for the non-polluting disposal of residual material from coal power stations by mixing dry residual materials with residual materials from a desulfurization plant, characterized in that the mixture is admixed with addition of at least 3 % of calcium hydroxide, based on the amount of the dry residual materials, to form an earth-moist product, is passed to the dumping ground and is compacted there.

2. The process according to claim 1, characterized in that the addition of calcium hydroxide is effected in the form of a dry powdery fly ashes derivative having a calcium hydroxide content of at least 4 % by weight.

3. The process according to claims 1 or 2, characterized in that the aqueous suspension of the hydrocyclone underflow of a two-stage wet flue gas desulfurization plant is used as the residual materials from a desulfurization plant.

4. The process according to claims 1 or 2, characterized in that the dry desulfurization product of a dry flue gas purification is used as the residual materials from a desulfurization plant.

5. The process according to anyone of claims 1 to 4, characterized in that in the dumped product the ratio of gypsum : dry residual materials is from 1 : 0.5 to 1 : 20.

## Revendications

1. Procédé pour l'entreposage non-polluant des matières résiduelles venant des centrales thermiques à charbon, par le mélange des matières résiduelles sèches avec des matières résiduelles d'une installation de désulfuration, caractérisé en ce que le mélange se fait, par addition au moins de 3 % en poids d'hydroxide de calcium par rapport à la quantité des matières résiduelles sèches pour obtenir un produit à consistance de terre humide qui est apporté à l'entreposage pour y être comprimé.

2. Procédé selon la revendication 1, caractérisé en ce que l'addition de l'hydroxide de calcium se fait sous forme d'un dérivé de cendre volante sèche, poudreuse ayant au moins une teneur en hydroxide de calcium de 4 % en poids.

3. Procédé selon la revendication 1 ou 2, caractérisé en ce que, comme matières résiduelles d'une installation de désulfuration, on emploie la suspension aqueuse du cours inférieur hydrocyclone d'une installation à deux stages pour la désulfuration par voie humide des gaz de fumée.

4. Procédé selon la revendication 1 ou 2, caractérisé en ce que, comme matières résiduelles d'une installation de désulfuration, on emploie le produit sec de désulfuration d'une purification sèche des gaz de fumée.

5. Procédé selon l'une des revendications 1 à 4, caractérisé en ce que le rapport de plâtre à matières résiduelles sèches dans le produit déposé est de 1 : 0.5 à 1 : 20.